# EUROPEAN PATENT APPLICATION

(11) **EP 3 110 153 A1**
(43) Date of publication of application: **28.12.2016**
(21) Application number: 15173087.6
(22) Date of filing: 22.06.2015
(51) Int. Cl.: H04N 19/25, H04N 19/503, H04N 7/18, G06T 7/00, G06K 9/46

(54) **KEYPOINT DATA ENCODING**

(71) Applicant: Technische Universität München, 80333 München (DE)
(72) Inventor: Chao, Jianshu, 214444, Jiangying, Jiangsu Province (DE); Steinbach, Eckehard, 82140 Olching (DE)
(74) Representative: Lucke, Andreas

(57) **Abstract**

Provided is an apparatus for analyzing regions of interest in image data, the apparatus being configured to receive encoded image data and encoded keypoint data over a communication interface, to decode the received image data and keypoint data, to determine a region of interest in the decoded image data, using the decoded keypoint data, and to analyze the region of interest.

## Description

### FIELD

The present invention relates to image data analysis. In particular, the present invention relates to preserving information on keypoints in to-be-compressed image data.

### BACKGROUND

Mobile devices running visual analysis applications may not be provided with sufficient hardware and/or software resources to analyze image data with a desired degree of performance and quality. To overcome this shortcoming, image data analysis may be offloaded to a remote computing device such as a remotely-located server or a cloud of servers (cloud).

The server or the cloud may receive the image data from the mobile devices over a data link or a communication channel. Moreover, server-based or cloud-based offloading of image data analysis tasks may generally be beneficial to reduce hardware and software resource requirements imposed on devices dedicated to image data capturing and analysis such as, for example, camera or video equipment in surveillance systems. However, image data analysis offloading necessitates that the image data is transmitted to the server or the cloud and may hence impose high data traffic demands on the data link.

To avoid excessive bandwidth requirements resulting therefrom, the captured image data may be compressed. To achieve a desired compression factor, the compression may involve discarding some of the information contained in the captured image data. I.e., the compression may involve a lossy compression technique. However, applying a lossy compression technique to the image data may have an adverse effect on the quality of the image data analysis performed by the server or the cloud.

Given the trade-off between bandwidth requirements on the one hand and image data analysis performance and quality requirements on the other hand, it is the object of the present invention to provide a superior solution that allows for high-quality, high-performance remote image data analysis having reasonable bandwidth requirements.

This object is solved by an apparatus for analyzing regions of interest in image data according to claim 1 and an apparatus for encoding image data according to claim 6, which, in terms of the above, may represent a server (or, in logical terms, a cloud) and a device (e.g., a mobile device) that offloads the image data analysis to the server (cloud). Moreover, the object is solved by a method of analyzing regions of interest in image data according to claim 12 which, in terms of the above, relates to server-side (cloud-side) processing steps but may also involve processing steps of the device, as set-out in some of its dependent claims.

The apparatus according to claim 1 is configured to receive encoded image data and encoded keypoint data over a communication interface, to decode the received image data and keypoint data, to determine a region of interest in the decoded image data using the decoded keypoint data, and to analyze the region of interest.

As used throughout the description and claims, the term "image data" is to be understood as data relating to or describing an image or a video such as, for example, an image file (or a video frame) and a video file, respectively. Moreover, the term "region of interest" is intended to be understood broadly as any area in a scene defined by the image data that may be of particular interest when performing an image data analysis. In particular, the term "region of interest" may relate to a keypoint in the (video) scene or to an area around one or more keypoints in the (video) scene.

Hence, the gist of the invention as defined by claim 1 is to receive keypoint data which is data relating to information on keypoints (i.e. interest points or salient points) in the image data supplemental to the encoded image data. In particular, the keypoint data may be appended to the image data, the image data may be appended to the keypoint data, or the keypoint data may be transmitted in a data structure separate from the image data.

The idea is that information which is sensitive to lossy compression techniques is extracted from the image data before compression takes place, providing the benefit of avoiding image data analysis deterioration due to bandwidth concerns or bandwidth shortcomings. As a result, the keypoint data consisting of, for example, data on locations, scales, and/or orientations may obviate the need to extract keypoints from the decoded image data. Thus, the keypoint data may avoid compression-induced errors in the extraction of keypoints from the compressed image data.

Moreover, the communication interface, which may be dedicated to wireless and/or wired data traffic, may be configured to allow for communicating with a multitude of different devices. Each device may provide encoded image data, wherein the image data of the devices may relate to different scenes or the same scene. The communication interface may comprise a network interface such as an Ethernet compliant interface, a bus interface such as an IEEE 802.4 or BACnet compliant interface, or a radio interface such as an LTE, IEEE 802.11, IEE 802.15, or IEEE 802.16 compliant interface.

When the communication interface allows for communicating with a multitude of different devices, the apparatus may act as server for the devices, thereby reducing hardware and software requirements imposed on the devices as indicated above. In this regard, the server may form part of a (temporary or ad-hoc) network comprising one or more mobile devices from which encoded image data may be signaled (transmitted) to the server using a wireless network connection, e.g., a communication channel in which data packets representing the image data are routed via one or more network nodes from the mobile devices to the server. In another preferred embodiment, the server may form part of a permanent installation, for example, a (building or on-site) security surveillance system, comprising one or more image data capturing devices such as cameras or video equipment which provide encoded image data to the server.

In a further preferred embodiment, the apparatus is further configured to analyze the region of interest to extract feature descriptors from features in the region of interest.

The feature descriptors (or feature vectors) may comprise values (or entries) which are expected to contain all or at least some relevant information on features in the region of interest for performing a desired image data analysis. The feature descriptors may be shift-invariant, scale-invariant, rotation-invariant and/or illumination-invariant. In performing the desired image analysis task, processing the feature descriptors may replace processing the complete image data from which the feature descriptors are calculated, thereby reducing the amount of data to be handled. For example, the desired image data analysis may involve matching the feature descriptors with feature descriptors of a database to classify the features in the region of interest.

In general terms, the calculation of feature descriptors is based on the keypoint data extracted from an image. The feature descriptors relate to information extracted from the region of interest and do not comprise the keypoint data. However, the exact nature of the information contained in the feature descriptors depends on the type of image data analysis to be performed and may hence vary from application to application.

In a further preferred embodiment, the keypoint data comprises information on a location of the region of interest, information on a location, a scale, and an orientation of the region of interest, a location value of the region of interest, or location, scale, and orientation values of the region of interest.

The information on a location of the region of interest may comprise a (quantized) location value of the region of interest such as a value describing a location of a pixel being the center of the region of interest which may be, for example, further defined by a circle around the center having a pre-defined diameter or radius. Alternatively, the circle may have a variable diameter or radius determined by a diameter or radius value contained in the keypoint data. Accordingly, the information may allow to correctly locate the region of interest in the decoded image data. By having information on scale and orientation of the region of interest, the search for features in the region of interest may be further facilitated as the region of interest may be specifically tailored to the features.

In a further preferred embodiment, the encoded image data is a second video frame and the keypoint data comprises prediction data and the apparatus is configured to predict a location value of the region of interest by applying the prediction data to a location value of a region of interest in a first video frame.

The prediction data may relate to data indicating, for example, a shift (e.g., a horizontal and/or a vertical movement in a scene defined by the image data), a scaling and/or a rotation of one or more regions of interest. Furthermore, the prediction data may allow predicting the one or more regions of interest in a current video frame (second video frame) from regions of interest or keypoints in a previous video frame (first video frame). Hence, the need to transmit information on locations, scales, and/or orientations of keypoints may be obviated and overall bandwidth requirements may be reduced.

While the prediction data required for prediction may usually be received by the server or the cloud as part of the keypoint data from the same device that transmits the first and second video frame, the necessity for receiving prediction data may in particular cases such as, for example, linear movements of features in the scene even be obviated. For example, a current prediction (prediction data) may be predicted from one or more preceding predictions. Moreover, predicting a current prediction from one or more previous predictions may be used to check and/or to correct received prediction data. For example, prediction data may be checked and corrected when a number of features derived from a predicted region of interest is less than expected.

In a further preferred embodiment, the decoded keypoint data comprises a location value of another region of interest in the decoded image data and the apparatus is further configured to analyze the other region of interest in the decoded image data to extract feature descriptors from features in the other region of interest.

Thus, the prediction data may relate to one or more particular regions of interest while other regions of interest may be derived from the keypoint data. In particular, the other region of interest may relate to a region of interest associated with an object or a person that entered the scene (represented by the image data) just between the first and second video frame. In this case, prediction of the other region of interest from previously determined regions of interest might not be effective.

Moreover, location values or other information relating to regions of interest may need to be updated or re-freshed after a number of predictions. For example, re-freshing could occur after a predetermined number of predictions or after a variable number of predictions based on a measure of change of the scene such as a shift, scale, and/or orientation distance metric. Accordingly, the location value of the other region of interest may be used to update a location value of a previously predicted region of interest. The updating may, for example, involve replacing or modifying the location value of the previously predicted region of interest based on the location value of the other region of interest.

The apparatus according to claim 6 is configured to determine a plurality of keypoints in the image data to compress the image data using a lossy compression technique, to encode the compressed image data, to remove one or more keypoints from the plurality of keypoints, to encode keypoint data, the keypoint data being based on the plurality of keypoints, except for the removed keypoints, and to transmit the encoded image data and the encoded keypoint data over a network.

As used throughout the description and claims, the term "lossy compression technique" or "lossy compression" is intended to be understood as a technique which, when applied to image data, reduces the overall data amount, e.g., the size of a computer file needed to store the image data, or the bandwidth needed to transmit the image data, by discarding some of the information contained in the uncompressed image data. Moreover, the term "encoding" as used throughout the description and claims is to be understood in a broad sense as referring to any operation that transforms a logical representation of image data to another logical representation or a physical representation, in particular for transmission purposes. For example, encoding may relate to quantization of (floating point) values and/or entropy encoding. In addition, the terms "transmitting" or "transmission" as used throughout the description and claims are to be understood in a broad sense as referring to any wireless or wired transfer of information and even to a transfer by means of a computer-readable medium.

As set forth above, predicting regions of interest from previously transmitted keypoint data may allow eliminating information on keypoints from the to-be-transmitted keypoint data to reduce data traffic. Hence, data traffic involved in transmitting keypoint data may be reduced without (severely) deteriorating the result of the image data analysis. Moreover, due to the above-proposed prediction of regions of interest from previously transmitted keypoint data which relates to previously transmitted image data, the apparatus may nevertheless receive, e.g., in response to transmitting the encoded image data and keypoint data which relate to a current image data frame, a feature matching result based on features which relate, inter-alia, to the eliminated (removed) keypoints.

In a preferred embodiment, the apparatus is further configured to remove the one or more keypoints on basis of a result of matching feature descriptors of features at locations of the one or more keypoints in the image data and feature descriptors of features at locations which correspond to the one or more keypoints in the compressed image data, and/or a result of matching the one or more keypoints in the image data with keypoints determined from the compressed image data.

Thus, bandwidth requirements may be further reduced by eliminating (all) keypoints that lead to diverging feature descriptors when being applied to the compressed and the uncompressed image data. Hence, keypoints which produce feature descriptors extracted from the compressed image data which deviate too much, for example, more than a pre-defined distance (according to a distance metric) from feature descriptors extracted from the uncompressed image data, may be removed from the plurality of keypoints on which the encoded keypoint data is based. To keep processing requirements acceptable, only a subset of feature descriptors may be evaluated or only some values or entries of a feature descriptor (to be used in image data analysis) may be evaluated.

Moreover, keypoints may be eliminated if they do sufficiently match (at least to a pre-defined degree) with keypoints in the compressed image data. For example, if the compression shifts a location of a keypoint in the compressed image data by less than a pre-defined distance, or if the compression scales the keypoint by less than a pre-defined scaling factor, or if the compression rotates a keypoint by less than a pre-defined rotation angle, or if the compression leads to a combination of the afore-mentioned conditions, the keypoint extracted from the uncompressed image data may be determined from the compressed image data and, in consequence, may be removed without further deteriorating image data analysis performance and quality.

In a further preferred embodiment, the image data is a second video frame and the apparatus is further configured to remove the one or more keypoints on basis of a result of matching the one or more keypoints with predicted keypoints, wherein the predicted keypoints are predicted from keypoints in a first video frame.

Thus, the apparatus may check whether a prediction value set exists that successfully matches keypoints in a previous video frame (first video frame) to keypoints in a current video frame (second video frame). The matching may involve determining a shift, a scale, and/or a rotation by which a keypoint and a predicted keypoint differ. For example, if the shift, the scale, the orientation, or combinations thereof differ by more than a pre-determined amount, a keypoint and a predicted keypoint may be considered as not matching and vice versa. Thus, if a prediction value set exists that can be used to successfully match one or more keypoints in the previous video frame with keypoints in the current video frame, the keypoints that can be predicted using the prediction value set may be removed from the plurality of keypoints on which the encoded keypoint data is based to save bandwidth.

In a further preferred embodiment, the keypoint data comprises one or more prediction value sets, the one or more prediction value sets defining a prediction of the predicted keypoints from keypoints in the first video frame.

Having prediction value sets comprised in the keypoint data allows predicting regions of interest in the current video frame from keypoint data or regions of interest of the previous video frame and hence obviates the need to signal "full" keypoint information including, for example, location, scale, and/or orientation values. Moreover, in the case that a majority of regions of interest in the current video frame can be predicted by using a comparatively small number of prediction value sets, the information to be transmitted can be remarkably reduced.

In a further preferred embodiment, a first prediction value set is associated with a plurality of keypoints in the first video frame, a second prediction value set is associated with a further keypoint in the first video frame, and the keypoint data further comprises a location value of a keypoint in the second video frame.

Thus, for the keypoints that can be predicted with a common prediction value set, only one common prediction value set may be transmitted. The common prediction value set may then be used to predict the regions of interest. Hence, the common prediction value set may be transmitted instead of transmitting "full" keypoint information of (all) keypoints relating to the common prediction value set to reduce data traffic. Thus, whenever possible and feasible, prediction value sets may be signaled instead of "full" information on the keypoints to which the prediction value sets relate to reduce the overall bandwidth requirements.

When receiving the prediction value sets, the regions of interest in the current video frame (second video frame) may be grouped in regions of interest that can be predicted from keypoint data of a preceding video frame (first video frame) and regions of interest that cannot be predicted from keypoint of the preceding video frame. Furthermore, "full" keypoint information contained in the keypoint data may be used to complement the prediction for those regions of interest that cannot be predicted, i.e., for which no corresponding prediction value set is available.

In a further preferred embodiment a system comprises the apparatus for analyzing regions of interest in image data and the apparatus for encoding image data, wherein the apparatus for analyzing regions of interest in image data is configured to receive the encoded image data and encoded keypoint data over the communication interface from the apparatus for encoding image data which is configured to transmit the encoded image data and the encoded keypoint data over the network to the first apparatus for analyzing regions of interest in image data. The method according to claim 12 comprises receiving encoded image data and encoded keypoint data over a network connection, decoding the received image data and keypoint data, determining a region of interest in the decoded image data, using the decoded keypoint data, and analyzing the region of interest.

In particular, the network connection may comprise a wireless network connection between a (mobile) device which captures and sends the encoded image data, and a base station forwarding the encoded image data to a server which analyzes the received image data. Moreover, the network connection may comprise a wired connection over which one or more devices are connected to the server and offload image data analysis to the server.

The server may in turn respond by issuing image data analysis results to the one or more devices, for example, based on matching feature descriptors in determined regions of interest in the received image data with feature descriptors in a database.

In a preferred embodiment, the method further comprises determining a plurality of keypoints in the image data, compressing the image data using a lossy compression technique, encoding the compressed image data, encoding keypoint data, the keypoint data being based on the plurality of keypoints, and transmitting the encoded image data and the encoded keypoint data over a network.

Accordingly, the encoded image data may be provided by compressing (originally uncompressed) image data, wherein the (originally uncompressed) image data cannot be recovered from the compressed image data. The keypoint data may be extracted from the (uncompressed) image data and may be appended to the encoded compressed image data or the encoded compressed image data may be appended to the keypoint data to allow determining regions of interest in the decoded image data by applying the keypoint data to the decoded image data.

In a further preferred embodiment, the method further comprises removing one or more keypoints from the plurality of keypoints, wherein the removing of the one or more keypoints is based on a result of matching feature descriptors of features at locations of the one or more keypoints in the image data and feature descriptors of features at locations which correspond to the one or morekeypoints, in the compressed image data, and/or a result of matching the one or more keypoints in the image data with keypoints determined from the compressed image data.

In a further preferred embodiment, the image data is a second video frame and the method further comprises removing one or more keypoints from the plurality of keypoints, wherein the removing of the one or more keypoints is based on a result of matching the one or more keypoints with predicted keypoints, wherein the predicted keypoints are predicted from keypoints in a first video frame, and wherein the method further comprises adding prediction data comprising one or more prediction value sets to the keypoint data, the one or more prediction value sets defining a prediction of the predicted keypoints from keypoints in the first video frame.

Accordingly, the prediction data comprises one or more prediction value set which when applied to the keypoints in the first video frame match the keypoints in the first video frame with keypoints in the second video frame. Moreover, instead of video frames relating to the same video sequence, the video frames may relate to different video sequences of a common scene, where regions of interest may be mapped or consolidated over the scene which may be stitched-together based on image data originating from several different devices. In this case, the response issued by the server may, at least in part, be based on matching feature descriptors derived from features in determined regions of interest in the stitched-together scene. Moreover, a region of interest relating to a first part of the stitched-together scene which is (primarily) derived from image data of a first device may be predicted from a region of interest in image data relating to a second part of the stitched-together scene which is (primarily) derived from image data of a second device.

In a further preferred embodiment, the method further comprises predicting a location value of the region of interest by applying the prediction data to location values of regions of interest in the first video frame.

### BRIEF DESCRIPTION OF THE DRAWINGS

- Fig. 1: schematically shows the apparatus for encoding image data which transmits encoded image data and encoded keypoint data to the apparatus for analyzing regions of interest in image data, according to an example.
- Fig. 2: schematically shows a series of encoded keypoint data frames transmitted from the apparatus for encoding image data to the apparatus for analyzing regions of interest of Fig. 1, according to an example.
- Fig. 3: schematically shows a keypoint data extraction unit of the apparatus for encoding image data of Fig. 1, according to an example.

In the drawings, identical or corresponding features are identified by the same reference signs and optional features are denoted by dotted rectangles or lines. Moreover, typical features of computing devices such as processors, computer-readable storage media and communication interfaces may be omitted for the sake of clarity.

### DETAILED DESCRIPTION

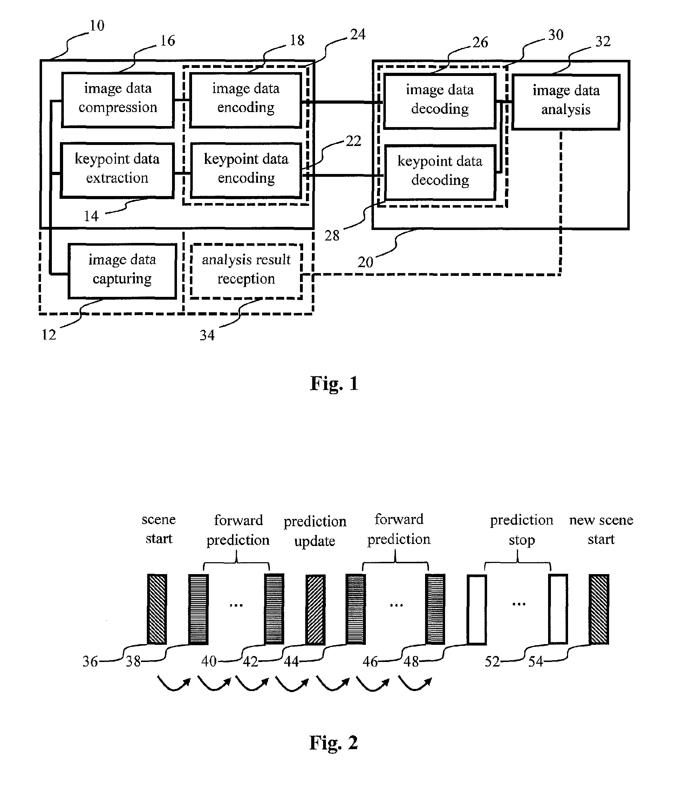

As shown in Fig. 1, the apparatus 10 for encoding image data is provided with image data from an image data capturing unit 12. As indicated by the dotted line around the image data capturing unit 12, the image data capturing unit 12 may form part of the apparatus 10 for encoding image data or may form part of another device which provides the apparatus 10 for encoding image data with the image data. For example, the image data capturing unit 12 may be a (video) camera. The camera may be integrated in the apparatus 10 for encoding image data. Alternatively, the camera may be connected to a communication interface of the apparatus 10 for encoding image data.

The apparatus 10 for encoding image data may processes the received image data by a keypoint data extraction unit 14 and an image data compression unit 16, wherein the processing may be performed in parallel. Before being processed, the image data may be buffered or stored in a buffer or a computer-readable storage medium. For example, the keypoint data extraction unit 14 and the image data compression unit 16 may read the image data from the buffer or the computer-readable storage medium. Accordingly, the keypoint data extraction unit 14 and the image data compression unit 16 may be provided with an identical copy of the stored image data.

The keypoint data extraction unit 14 extracts keypoint data from the image data while the image data compression unit 16 compresses the image data. In particular, the keypoint data extraction unit 16 may recognize or detect features in the image data. The features may be defined or represented by values for location, scale, and/or orientation relative to a scene depicted by the image data. In particular, the features may be detected from a single image or from each video frame independently or the features may be detected from a series of video frames taking into account correlations of the consecutive video frames.

The feature extraction algorithm may be used to determine keypoints in each frame, wherein each keypoint may be defined by a keypoint vector *kᵢ*={*lᵢ, σᵢ, θᵢ*} where *lᵢ* is the location of keypoint *i* in the frame, *σᵢ* is the scale, and *θᵢ* is the orientation of the keypoint. In particular, the scale invariant feature transform (SIFT) feature extraction algorithm may be used to detect keypoints in the image data, and the SIFT keypoint vectors may form the keypoint data.

The image data compression unit 16 may compress the image data using, for example, JPEG, JPEG2000, H.264/AVC Intra mode, or H.265/HEVC Intra mode.

The image data compression unit 16 forwards the compressed image data to the image data encoding unit 18. The image data encoding unit 18 encodes the compressed image data and transmits the encoded image data to the apparatus 20 for analyzing regions of interest. For example, the compressed image data may be encoded using JPEG or JPEG2000 coders or a turbo code or a QC-LDPC code and transmitted to the apparatus 20 for analyzing regions of interest via an LTE base station or another wireless communication network technology.

The keypoint data extraction unit 14 forwards the extracted keypoint data to the keypoint data encoding unit 22. The keypoint data encoding unit 22 encodes the extracted keypoint data and transmits the encoded keypoint data to the apparatus 20 for analyzing regions of interest. The keypoint data may be similarly or identically encoded and transmitted as the compressed image data.

Moreover, the image data encoding unit 18 and the keypoint data encoding unit 22 may be merged to an image data frame encoding unit 24 (indicated as optional by the dotted rectangle around the image data encoding unit 18 and the keypoint data encoding unit 22 in Fig. 1) which encodes an image data frame comprising the compressed image data and the keypoint data, wherein the keypoint data is, for example, appended to the compressed image data or the compressed image data is appended to the keypoint data.

Moreover, the keypoint data extraction unit 14, the image data compression unit 16, the image data encoding unit 18, and the keypoint data encoding unit 22 may be implemented by hardware, software, or a combination thereof. In this regard, the apparatus 10 for encoding image data may comprise one or more processors and a computer readable medium which stores instructions that, when executed by the one or more processors, implement the above-described process.

The apparatus 20 for analyzing regions of interest receives the encoded image data and the encoded keypoint data from the apparatus 10 for encoding image data which may together form a system. The encoded image data is routed to an image data decoding unit 26 and the encoded keypoint data is routed to a keypoint data decoding unit 28. The image data decoding unit 26 decodes the encoded image data and the keypoint data decoding unit 28 decodes the encoded keypoint data. In case of receiving the encoded image data and the encoded keypoint data as part of an encoded image data frame, the apparatus 20 for analyzing regions of interest may comprise an image data frame decoding unit 30 (indicated as optional by the dotted rectangle around the image data decoding unit 26 and the keypoint data decoding unit 28 in Fig. 1) which decodes the image data frame and outputs decoded image data and decoded keypoint data.

The decoded image data is analyzed by an image data analysis unit 32. In particular, the image data analysis unit 32 determines a region of interest in the decoded image data using the decoded keypoint data. For example, the image data analysis unit 32 derives a location of a keypoint from the decoded keypoint data and calculates a feature descriptor from a patch of the image data in a region of interest located around the keypoint. The calculated feature descriptor may be matched with feature descriptors in a database to identify correspondences.

For example, the apparatus 20 for analyzing regions of interest may comprise or may be connected to a database containing feature descriptors. When one or more correspondences are identified, a result of the image data analysis may be generated. The analysis result may be transmitted (as indicated by the dotted line in Fig. 1) to an analysis result reception unit 34. As indicated by the dotted rectangle around the analysis result reception unit 34 in Fig. 1, the analysis result reception unit 34 is optional and may form part of the apparatus 10 for encoding image data. When the analysis result reception unit 34 forms part of the apparatus 10 for encoding image data, the analysis result may be presented to a user of the apparatus 10 for encoding image data.

If consecutively transmitted image data frames relate to a video sequence, keypoints detected in consecutive video frames may have related locations, scales, and/or orientations. Accordingly, keypoints (locations, scales, and/or orientations) extracted from un-compressed image data of a current video frame may be propagated to consecutive video frames. In particular, keypoints or, in more general terms, regions of interest in a current video frame may be predicted from regions of interest or keypoints in a preceding video frame as explained in more detail in the following.

The image data compression unit 16 may compress the video data using, for example, H.264/AVC or H.265/HEVC. In particular, for example, the image data compression unit 16 may compress the video data using H.264/AVC with IPPP··· structure, IntraPeriod=50 frames, QP={38, 42, 46, 50}, or H.265/HEVC with parameters as in the HEVC version 16.0 manual with GOP structure IBBBPBBBP··· and QP={38, 42, 46, 50}, for low bitrate compression.

For example, video sequence analysis may start with transmitting an encoded first video frame and corresponding encoded first keypoint data from the apparatus 10 for encoding image data to the apparatus 20 for analyzing regions of interest. The first keypoint data may comprise location, scale, and/or orientation values of keypoints which may be used to determine one or more regions of interest 36 in the first video frame analogously to the process described above.

However, instead of transmitting a second video frame and corresponding second keypoint data with location, scale, and/or orientation values of (all) keypoints in the second video frame, the apparatus 10 for encoding image data may check whether one or more geometric transformations, e.g., an affine transformation, perspective transformation, etc., exist that predict or map location, scale and/or orientation values of regions of interest or keypoints in the first video frame to location, scale, and/or orientation values of regions of interest or keypoints in the second video frame.

To determine a geometric transformation that predicts or maps location, scale, and/or orientation values of keypoints in the first video frame to location, scale, and/or orientation values of keypoints in the second video frame, a feature matching or keypoint matching between features and keypoints, respectively, in the first video frame and in the second video frame may be performed. For example, the feature or keypoint matching may be based on a nearest neighbor distance ratio (NNDR) matching strategy.

Moreover, the feature or keypoint matching may be used to determine areas in a scene defined by two consecutive video frames which remain static. The areas that do not remain static between two consecutive video frames may be analyzed in view of geometric transformations that match features or keypoints in the first video frame with features or keypoints in the second video frame. This process may be repeated with different matching strategies to find geometric transformations for as many areas as possible.

For example, a video frame of a video sequence featuring a number of N moving objects may be divided in a static background and N areas, the location, scale, and/or orientation values of which may be predicted from a previous video frame by N or less than N geometric transformations. To exploit or benefit from this interrelation between consecutive video frames, the keypoint data relating to the second video frame may comprise prediction data such as, for example, prediction value sets, wherein each prediction value set may correspond to one geometric transformation. Furthermore, the keypoint data relating to the second video frame may comprise information that allows associating regions of interest or keypoints in the first video frame with corresponding prediction value sets.

As features in the background may appear or disappear as objects move, there may also be some regions of interest or keypoints in the second video frame that cannot be predicted from regions of interest or keypoints of the first video frame. Accordingly, the second keypoint data may comprise location, scale, and/or orientation values of keypoints that cannot be predicted. However, if the number of keypoints that cannot be predicted is sufficiently low, the second prediction value set may comprise only said one or more prediction value sets to minimize the size of the second keypoint data.

For example, Fig. 2 shows a series of keypoint data frames 36-54 (encoded keypoint data) which are transmitted from the apparatus 10 for encoding image data to the apparatus 20 for analyzing regions of interest. Each keypoint data frame 36-54 corresponds to a video frame. The first keypoint data frame 36 comprises location, scale, and/or orientation values of a plurality of keypoints but no prediction data, as the first video frame defines the start of a new scene which develops throughout the following video frames 36-48.

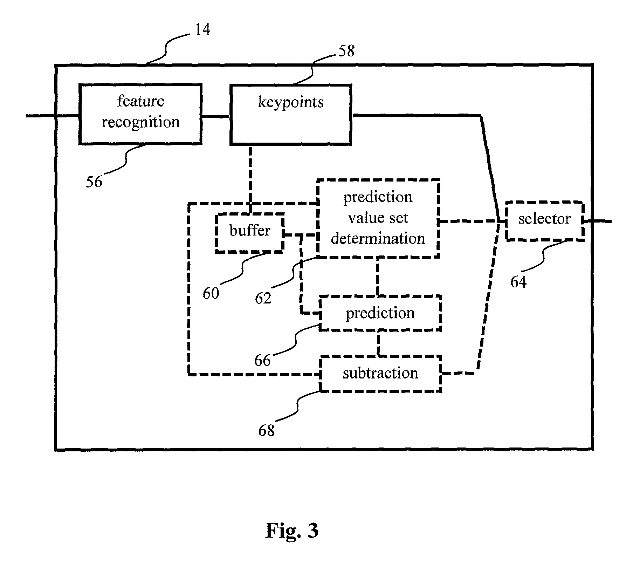

Accordingly, the first keypoint data frame 36 may be generated by routing the image data from the image data capturing unit 12 to the feature recognition unit 56 of the keypoint data extraction unit 14 as shown in Fig. 3. The feature recognition unit 56 may recognize features in the first video frame and transmit the recognized features, e.g., location, scale, and/or orientation values and select some or all features as keypoints 58 and output keypoint data comprising location, scale, and/or orientation values of the selected keypoints 58 to the keypoint data encoding unit 22. The keypoint data encoding unit 22 may quantize the (floating point) location, scale, and/or orientation values and perform entropy encoding on the quantized location, scale, and/or orientation values.

The second keypoint data frame 38 comprises one or more prediction value sets to allow for predicting regions of interest or keypoints in the second video frame from, for example, the location, scale, and/or orientation values of the regions of interest in the first video frame or the keypoints in the first keypoint data frame. The second keypoint data frame 38 may be generated by buffering the keypoints 58 of the first video frame in the buffer unit 60 and determining a geometric transformation which matches the keypoints 58 of the first video frame with the keypoints 58 of the second video frame in the prediction value set determination unit 62.

The prediction value set determination unit 62 may derive one or more prediction value sets from the determined geometric transformation. The one or more prediction value sets which may comprise (horizontal and vertical) shift values, scaling factors, and/or rotation values and information associating keypoints and prediction value sets may be output to the keypoint data encoding unit 22. The keypoint data encoding unit 22 may quantize the (floating point) prediction values and perform entropy encoding on the quantized prediction values. The selector unit 64 may block the information of the keypoint extraction unit 58 for each keypoint 58 which can be predicted by a prediction value set which relates to the keypoint 58. This process may be repeated for consecutive video frames as indicated by the dots between keypoint data frame 38 and keypoint data frame 40 in Fig. 2.

However, after a fixed number of predictions or in case that the apparatus 10 for encoding image data detects that predicted keypoints and determined keypoints 58 do not sufficiently match (in terms of quality and/or quantity) a keypoint data frame 42 may be transmitted from the apparatus 10 for encoding image data to the apparatus 20 for analyzing regions of interest which comprises (differential) location, scale, and/or orientation values of keypoints 58 in addition to the one or more prediction value sets to update the predicted regions of interest or keypoints.

For example, the apparatus 10 for encoding image data may find that a percentage of keypoints 58 in a current video frame which can be predicted from keypoints 58 in a previous video frame drops below a threshold. Alternatively or in addition, the apparatus 10 for encoding image data may find that location, scale, and/or orientation values of predicted keypoints do not sufficiently match with location, scale, and/or orientation values of keypoints 58 determined from the current video frame. For example, a location value may differ by more than a distance threshold, a scale value may differ by more than a scaling factor threshold, and/or an orientation value may differ by more than a rotation threshold, or a combination of these issues may occur.

Accordingly, the apparatus 10 for encoding image data may add to the keypoint data frame 42 (differential) location, scale, and/or orientation values for those keypoints 58 which cannot be predicted at all or which cannot be predicted with a sufficient degree of accuracy. In particular, the selector unit 64 may let pass information on keypoints 58 from the keypoint extraction unit 58 that cannot be predicted.

Moreover, the keypoints of the preceding video frame and the determined prediction value sets may be provided to the prediction unit 66 from the buffer unit 60 and the prediction value set determination unit 62, respectively, to allow the prediction unit 66 to predict keypoints of the current video frame. The location, scale, and/or orientation values of the predicted keypoints may be subtracted from the location, scale, and/or orientation values of the extracted keypoints 58 to generate differential location, scale, and/or orientation values. The selector unit 64 may let the differential location, scale, and/or orientation values of the subtraction unit 68 pass to allow correcting location, scale, and/or orientation values of keypoints 58 which cannot be predicted with a sufficient degree of accuracy.

The selector unit 64 may output keypoint data comprising (differential) location, scale, and/or orientation values of the keypoints 58 to the keypoint data encoding unit 22 which may quantize the (differential) location, scale, and/or orientation values and perform entropy encoding on the quantized (differential) location, scale, and/or orientation values. Likewise, the (horizontal and vertical) shift values, the scaling factors, and/or the rotation values and the information which associates keypoints 58 and prediction value sets may be output to the keypoint data encoding unit 22. The keypoint data encoding unit 22 may quantize the prediction values and perform entropy encoding on the quantized prediction values.

The apparatus 20 for analyzing regions of interest may receive the keypoint data frame 42, predict the regions of interest in the corresponding video frame, correct location, scale and/or rotation values of predicted regions of interest based on the differential location, scale, and/or orientation values in the received keypoint data frame 42 and add regions of interest based on location, scale, and/or orientation values in the received keypoint data frame 42.

The process relating to Fig. 2 continues with predicting and updating of regions of interest until the apparatus 10 for encoding image data processes a video frame whose keypoints 58 cannot be predicted from keypoints of the preceding frame, or where the percentage of keypoints that can be predicted is below a first threshold, or the scene is not stable across a certain number of video frames. The apparatus 10 for encoding image data then sends a series of empty keypoint data frames 48, 52 as indicated by the dots, which indicate a rapidly changing portion of the scene. In this case, the selector unit 64 of Fig. 3 may block all keypoint data.

Nevertheless, the apparatus 10 for encoding image data may continue to predict keypoints of current frames from preceding frames and, when the apparatus 10 for encoding image data detects that the percentage of keypoints that can be predicted rises above a second threshold and the scene is stable across a certain number of video frames, may transmit a keypoint data frame 54 which comprises location, scale, and/or orientation values of a plurality of keypoints 58 to the apparatus 20 for analyzing regions of interest. However, the keypoint data frame 54 may, like the first keypoint data frame 36, no contain prediction data as it relates to a video frame that defines the start of a new scene.

### LIST OF REFERENCE SIGNS

- 10: apparatus for encoding image data
- 12: image data capturing unit
- 14: keypoint data extraction unit
- 16: image data compression unit
- 18: image data encoding unit
- 20: apparatus for analyzing regions of interest
- 22: keypoint data encoding unit
- 24: image data frame encoding unit
- 26: image data decoding unit
- 28: keypoint data decoding unit
- 30: image data frame decoding unit
- 32: image data analysis unit
- 34: analysis result reception unit
- 36-54: keypoint data frames
- 56: feature recognition unit
- 58: keypoint
- 60: buffer unit
- 62: prediction value set determination unit
- 64: selector unit
- 66: prediction unit
- 68: subtraction unit

## Claims

1. An apparatus (20) for analyzing regions of interest in image data, the apparatus (20) being configured to:
receive encoded image data and encoded keypoint data over a communication interface;
decode the received image data and keypoint data;
determine a region of interest in the decoded image data, using the decoded keypoint data; and
analyze the region of interest.

2. The apparatus (20) of claim 1, wherein the apparatus (20) is further configured to analyze the region of interest to extract feature descriptors from keypoints in the region of interest.

3. The apparatus (20) of claim 1 or 2, wherein the keypoint data comprises:
information on a location of the region of interest;
information on a location, a scale, and an orientation of the region of interest;
a location value of the region of interest; or
location, scale, and orientation values of the region of interest.

4. The apparatus (20) of any one of claims 1 to 3, wherein the encoded image data is a second video frame and wherein the keypoint data comprises prediction data; and wherein the apparatus (20) is configured to predict a location value of the region of interest by applying the prediction data to a location value of a region of interest in a first video frame.

5. The apparatus (20) of claim 3 or 4, wherein the decoded keypoint data further comprises a location value of another region of interest in the decoded image data and wherein the apparatus (20) is further configured to analyze the other region of interest in the decoded image data to extract feature descriptors from features in the other region of interest.

6. An apparatus (10) for encoding image data, the apparatus (10) being configured to:
determine a plurality of keypoints (58) in the image data;
compress the image data using a lossy compression technique;
encode the compressed image data;
remove one or more keypoints (58) from the plurality of keypoints (58);
encode keypoint data, the keypoint data being based on the plurality of keypoints (58),
except for the removed keypoints (58); and
transmit the encoded image data and the encoded keypoint data over a network.

7. The apparatus (10) of claim 6, wherein the apparatus (10) is further configured to remove the one or more keypoints (58) on basis of:
a result of matching feature descriptors of features at locations of the one or more keypoints (58) in the image data and feature descriptors of features at locations which correspond to the one or more keypoints, in the compressed image data; and/or
a result of matching the one or more keypoints (58) in the image data with keypoints determined from the compressed image data.

8. The apparatus (10) of claim 6 or 7, wherein the image data is a second video frame and wherein the apparatus (10) is further configured to remove the one or more keypoints (58) on basis of a result of matching the one or more keypoints (58) with predicted keypoints, wherein the predicted keypoints are predicted from keypoints in a first video frame.

9. The apparatus (10) of claim 8, wherein the keypoint data comprises one or more prediction value sets, the one or more prediction value sets defining a prediction of the predicted keypoints from keypoints in the first video frame.

10. The apparatus (10) of claim 9, wherein a first prediction value set is associated with a plurality of keypoints in the first video frame, a second prediction value set is associated with a further keypoint in the first video frame, and the keypoint data further comprises a location value of a keypoint in the second video frame.

11. A system, comprising a first apparatus (20) according to any one of claims 1 to 5 and a second apparatus (10) according to any one of claims 6 to 10, wherein the first apparatus (20) is configured to receive the encoded image data and encoded keypoint data over the communication interface from the second apparatus (10) which is configured to transmit the encoded image data and the encoded keypoint data over the network to the first apparatus (20).

12. A method of analyzing regions of interest in image data, the method comprising:
receiving encoded image data and encoded keypoint data over a network connection;
decoding the received image data and keypoint data;
determining a region of interest in the decoded image data, using the decoded keypoint data; and
analyzing the region of interest.

13. The method of claim 12, further comprising:
determining a plurality of keypoints (58) in the image data;
compressing the image data using a lossy compression technique;
encoding the compressed image data;
encoding keypoint data, the keypoint data being based on the plurality of keypoints (58); and
transmitting the encoded image data and the encoded keypoint data over a network.

14. The method of claim 13, further comprising:
removing one or more keypoints (58) from the plurality of keypoints (58); wherein the removing of the one or more keypoints (58) is based on:
a result of matching feature descriptors of features at locations of the one or more keypoints (58) in the image data and feature descriptors of features at locations which correspond to the one or more keypoints (58), in the compressed image data; and/or
a result of matching the one or more keypoints (58) in the image data with keypoints determined from the compressed image data.

15. The method of claim 13 or 14, wherein the image data is a second video frame and wherein the method further comprises removing one or more keypoints (58) from the plurality of keypoints (58); wherein the removing of the one or more keypoints (58) is based on:
a result of matching the one or more keypoints (58) with predicted keypoints, wherein
the predicted keypoints are predicted from keypoints in a first video frame; and
wherein the method further comprises adding prediction data comprising one or more prediction value sets to the keypoint data, the one or more prediction value sets defining a prediction of the predicted keypoints from keypoints in the first video frame, wherein the method preferably, further comprises a step of predicting a location value of the region of interest by applying the prediction data to location values of regions of interest in the first video frame.
